# EUROPEAN PATENT SPECIFICATION

(11) **EP 3 564 741 B1**
(45) Date of publication and mention of the grant of the patent: **22.11.2023**
(21) Application number: 17889720.3
(22) Date of filing: 04.01.2017
(51) Int. Cl.: G02F 1/136, G02F 1/1362, G02F 1/1368

(54) **PIXEL UNIT STRUCTURE**
PIXELEINHEITSSTRUKTUR
STRUCTURE D'UNITÉ DE PIXEL

(43) Date of publication of application: 06.11.2019
(73) Proprietor: Tseng, Shih-Hsien, Hsinchu City 300 (TW)
(72) Inventor: Tseng, Shih-Hsien, Hsinchu City 300 (TW)
(74) Representative: Straus, Alexander
(86) International application number: PCT/CN2017/070146
(87) International publication number: WO 2018/126358

(56) References cited:
- WO-A1-94/17439
- CN-A- 1 267 395
- CN-A- 101 047 130
- CN-A- 101 122 693
- CN-A- 103 779 391
- JP-A- 2001 217 245
- JP-A- 2001 272 693
- US-A1- 2008 064 129
- US-A1- 2011 043 105

## Description

### Background of the Invention

### 1. Field of the Invention

The present invention relates to a pixel unit structure, and more specifically, the present invention relates to a pixel unit structure with a display medium module.

### 2. Description of the Prior Art

With the advancement of technology, users are getting more demanding about visual display and require display devices with the advantages of compactness, excellent display quality, large-sized panel, high color saturation, low cost and low power consumption.

Existing display devices may be categorized into self-luminous and non-self-luminous ones. Liquid crystal display (LCD) devices are one of the primary non-self-luminous flat panel display devices, wherein the amount of light passing through a liquid crystal medium is modulated by controlling the voltage of the upper and lower electrodes of the liquid crystal medium. The effect of color display is achieved with further employment of a color filter layer, a polarizer and some optical films.

Self-luminous flat panel display devices may be categorized into field emissive display, plasma display, electroluminescent display, organic light-emitting diode display and so on. In an organic light-emitting diode display (OLED), light-emitting polymers are deposited between an upper electrode layer and a lower electrode layer. With further employment of a conductive layer of electrons and holes, light is generated by means of an external electric field which moves the carriers and causes the electrons and holes to re-combine. In comparison, an organic light-emitting diode display device is characterized by its wide viewing angle, fast responding speed, thin panel and flexibility; further, it requires neither backlighting nor color filter and may be made large-sized.

The display panel of both LCD and OLED devices has a plate of transparent glass for a substrate, directly forming a thin-film transistor, a lower electrode layer, a display medium layer, an upper electrode layer and others thereon. The thin-film transistor may control the voltage or current imposed on the upper electrode layer and/or the lower electrode layer to control the state of the display medium.

However, a glass substrate may not endure a high annealing temperature (the strain temperature of glass being around 650°C). Therefore, the manufacturing process of the foregoing elements has to be performed at a relatively low temperature. This may cause a low mobility rate of electron in the thin-film transistor, which means a larger-sized transistor is required for providing sufficient charging ability.

Further, the larger the size of the glass substrate, the larger the area of the thin-film transistor formed on the glass substrate (that is, the array of the thin-film transistor has larger dimensions) . The manufacturing process of the thin-film transistor will have the disadvantages of expensive equipment, complicated manufacturing process, longer manufacturing time, and unstable mass production quality and yield rate. Therefore, a large-dimensioned array of thin-film transistor is harder to manufacture and its manufacturing cost is higher.

In view of the foregoing, existing display devices still have various disadvantages to overcome.

### Summary of the Invention

It is a primary object of the present invention to provide a pixel unit structure and a manufacturing method thereof, the latter not forming part of the claimed invention, wherein the pixel unit structure may be applied in a display device to improve one of the disadvantages of existing display devices, for example, to improve the manufacturing yield rate, lower the manufacturing cost, reduce the manufacturing time, or improve the mobility rate of electron, and so on.

To achieve the foregoing object, the present invention provides a display device as claimed in claim 1.

Thus, a pixel unit structure as part of a display device according to the present invention may provide at least the following advantageous effects: the active switching element is manufactured before being assembled on the display medium module; that is, the active switching element is not directly manufactured on some portion of the display medium module. As such, the manufacturing process condition of the active switching element may be less restricted by the characteristics of the display medium module (e.g. material property). Further, the active switching element is manufactured on a wafer, which may endure a higher processing temperature, and the processing technique of wafers is also more matured and advanced. Therefore, active switching elements manufactured on wafers may have better characteristics (e.g. a higher yield rate or a faster mobility rate of electron in a transistor).

On the other hand, the pixel unit structure is capable of being independently disposed, assembled and disassembled. In the case of a display panel composed of a plurality of pixel unit structures, a damaged pixel unit structure may be disassembled and replaced by a new one. As such, there is no need to replace an entire display panel for the sake of a single damaged pixel unit structure. Prior art related to individual assembly of parts of pixel unit structures are JP 2001-217245 A and US 2011/043105 A1.

The foregoing objects, technical features and advantages of the present invention will become apparent after the following detailed description of preferred embodiments in conjunction with the attached drawings.

These and other objectives of the present invention will no doubt become obvious to those of ordinary skill in the art after reading the following detailed description of the preferred embodiment that is illustrated in the various figures and drawings.

### Brief Description of the Drawings

Figure 1 is a top view of a pixel unit structure according to a first preferred embodiment of the present invention;
Figures 2A and 2B are cross-section views of the pixel unit structure of Figure 1;
Figures 3A to 3C are cross-section views of a pixel unit structure according to a second preferred embodiment of the present invention;
Figures 4A and 4B are cross-section views of a pixel unit structure according to a third preferred embodiment of the present invention;
Figures 5A and 5B are cross-section views of a pixel unit structure according to a fourth preferred embodiment of the present invention;
Figure 6 is a flow diagram showing a manufacturing method of a pixel unit structure according to a fifth preferred embodiment of the present invention;
Figure 7A is a three-dimensional view of a display device according to a sixth preferred embodiment of the present invention;
Figure 7B is a detailed drawing showing the display device of Figure 7A in partial enlargement;
Figure 7C is a partial cross-section view of the display device of Figure 7A; and
Figure 8 is an application schematic view of the display device of Figure 7A.

### Detailed Description

The implementation method of the present invention will be further illustrated by way of the following description of six preferred embodiments. But it should be noted that the six preferred embodiments described below are illustrative and exemplary only rather than limiting the application of the present invention to the described environment, application, structure, procedure or steps. Elements that are not directly related to the present invention are ignored from the drawings. The scale relations among elements in the drawings are illustrated rather than limiting of the actual scales of the present invention. Unless noted otherwise, identical (or similar) reference symbols correspond to identical (or similar) elements.

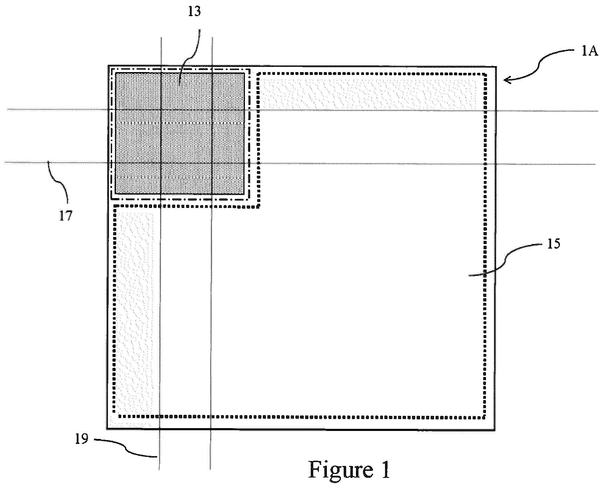

Please refer to Figure 1, showing a top view of a pixel unit structure 1A according to a first preferred embodiment of the present invention. The pixel unit structure 1A may serve as part of a display panel (not shown in the drawing) for displaying a pixel part of an image; that is, a display panel includes a plurality of pixel unit structures 1A according to the present embodiment. The pixel unit structure 1A includes an active switching element 13, a display medium module 15 and other elements. The active switching element 13 is used to control the state of the display medium module 15 to further control the amount of light passing through a display medium module 15 (or modulating the properties of light). More specific technical contents will be illustrated below.

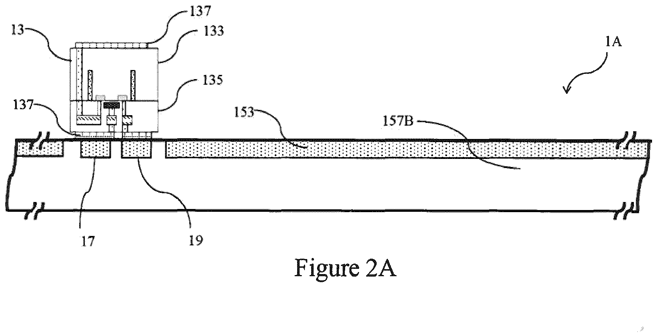

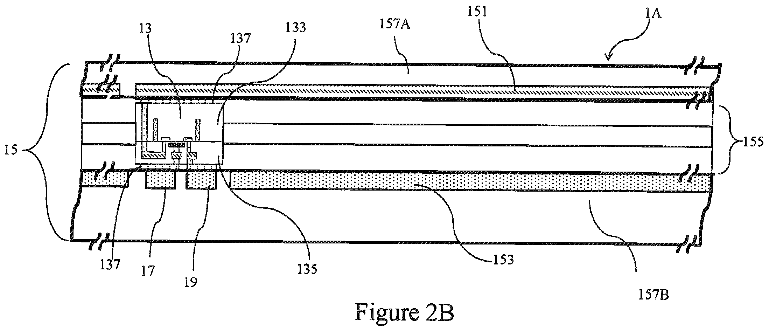

Please refer to both Figures 2A and 2B, showing cross-section views of the pixel unit structure 1A of Figure 1. The active switching element 13 includes a chip part 133 and a transistor portion 135, with the transistor portion 135 formed on the chip part 133. That is, the chip part 133 is part of a wafer (not shown in the drawings) . The wafer may be silicon wafer, gallium arsenide wafer, sapphire wafer, indium phosphide wafer or gallium nitride wafer and so on (silicon wafer is used in the present preferred embodiment). The transistor portion 135 is formed on the wafer by a semiconductor manufacturing process (exposure, development, etching, diffusion, deposition, and so on) . A plurality of transistor portions 135 may be simultaneously formed on the wafer and then the wafer may be divided into a plurality of parts by a cutting process (with each part including one or more transistor portions 135) . Each of these parts is a foregoing active switching element 13. The active switching element 13 may also be regarded as a chip or die.

Further, the transistor portion 135 may be formed of one of the following semiconductor materials: silicon, silicon on insulator (SOI), germanium, selenium, gallium arsenide, gallium nitride, three-five compound, two-six compound, four-four compound, four-four alloy, amorphous silicon, and a combination thereof. In addition, the active switching element 13 may also include a plurality of electrodes 137 formed on the chip part 133 and/or the transistor portion 135 for electrically connecting to the source electrode, gate electrode and drain electrode of the transistor portion 135 separately.

The display medium module 15 comprises a first electrode 151, a second electrode 153 and a display medium 155. The first electrode 151 and the second electrode 153 are separated from each other and may face each other. And the display medium 155 is disposed between the first electrode 151 and the second electrode 153. The first electrode 151 and the second electrode 153 may also be called pixel electrode and common electrode and may be transparent electrodes (e.g. formed of indium tin oxide) . Electrical energy may be imposed on the first electrode 151 and the second electrode 153 to change the magnitude and/or the direction of the voltage, current, inductance, capacitance, electrical field, and magnetic field between the first electrode 151 and the second electrode 153 and one of the combinations thereof.

The first electrode 151 is electrically connected to the active switching element 13 (e.g. via the electrode 137 of the active switching element 13). The active switching element 13 controls whether electrical energy is to be imposed on the first electrode 151 and/or the second electrode 153.

The display medium 155 may also be called light modulation medium. Its state is changed via the first electrode 151 and the second electrode 153 to control the amount of light passing through (or modulate the properties of light). Specifically, the active switching element 13 controls the electrical energy imposed on the first electrode 151 and/or the second electrodes 153, causing the voltage and so on between the first electrode 151 and the second electrode 153 to change, which causes the state of the display medium 155 to change. In the case of a display medium 155 made of non-self-luminous liquid crystal, change in the state of the display medium 155 means torsion of the liquid crystal. In the case of a display medium 155 made of self-luminous organic light-emitting diode, change in the state of the display medium 155 means light generation of the organic light-emitting diode. The type of the display medium 155 is relevant to the configuration of the first electrode 151 and the second electrode 153. For example, if the display medium 155 is in-plane-switching liquid crystal, the first electrode 151 and the second electrode 153 may be arranged on the same plane.

Besides non-self-luminous and self-luminous medium materials, in other preferred embodiments the display medium 155 may also include color filter material, conductive material, insulating material, light absorbing material, light reflecting material, photo refractive material, light deflecting material, light diffusing material and at least one of the foregoing materials (the foregoing materials may be formed on the first substrate 157A and/or the second substrate 157B described below, or may be formed into a plate body before being disposed on the first substrate 157A and/or the second substrate 157B) . Non-self-luminous medium materials may include at least one of electrophoretic material, electric fluid material, liquid crystal material, micro electromechanical reflective material, electrowetting material, electric ink material, magnetic fluid material, electrochromic material, electromorphous material and thermochromic material. Self-luminous medium materials may include at least one of electroluminescent material, photoluminescent material, cathodoluminescent material, field emissive luminescent material, vacuum fluorescent material and light-emitting diode material for producing white, red, green, blue, orange, yellow and other colors, or combinations thereof.

The display medium module 15 also includes a first substrate 157A and a second substrate 157B, which are disposed facing each other and separate from each other and are used for supporting the first electrode 151, the second electrode 153 and/or the display medium 155. The first electrode 151 is disposed on the first substrate 157A, the second electrode 153 may be disposed on the first substrate 157A and/or the second substrate 157B (depending on the type of the display medium 155), and the display medium 155 may be disposed between the first substrate 157A and the second substrate 157B (or, when the display medium module 15 comprises only one of the first substrate 157A and the second substrate 157B, the display medium 155 may be disposed on the first substrate 157A or the second substrate 157B) . The active switching element 13 may be disposed on the first substrate 157A and/or the second substrate 157B, but not directly manufactured on the first substrate 157A and/or the second substrate 157B; that is, the active switching element 13 is manufactured before being assembled to the first substrate 157A and/or the second substrate 157B. Further, the active switching element 13 may be disposed on a surface of the first substrate 157A and/or the second substrate 157B.

The first substrate 157A or the second substrate 157B may be made of (but not limited to) the following materials: transparent material, opaque material, flexible material, rigid material, metallic material, ceramic material, insulating material, metal compound material, metal alloy material, organic material, inorganic material, composite material, semiconductor material and one of the combinations thereof. In the present preferred embodiment, the first substrate 157A and the second substrate 157B are made of transparent material (such as glass).

The foregoing flexible material may include: polyethylene naphthalate (PEN), polyvinyl chloride (PVC) , polyether sulfone (PES) , polyethylene terephthalt (PET) , polyarylate (PAR), polystyrene (PS), polycarbonate (PC), polyimide (PI), polymethyl methacrylate (PMMA), polyacrylonitrile (PAN), polyamide (PA) and one of the combinations thereof.

The pixel unit structure 1A may also include a control signal line 17 and a data signal line 19. The control signal line 17 and the data signal line 19 may be formed on the first substrate 157A and/or the second substrate 157B and electrically connected to the active switching element 13 (e.g. via the electrode 137 of the active switching element 13) . The on and off of the active switching element 13 may be controlled via the control signal line 17, and electrical energy (i.e. pixel content, which is represented in the form of voltage or electric current) may optionally be transmitted to the active switching element 13 via the data signal line 19 and be further imposed on the first electrode 151. The control signal line 17, data signal line 19, first electrode 151 and/or second electrode 153 may be located on a same horizontal layer or on different horizontal layers of the first substrate 157A and/or the second substrate 157B.

Further, the control signal line 17, data signal line 19, first electrode 151 and/or second electrode 153 may be made of (but not limited to) the following materials: transparent conductive material, non-transparent conductive material, flexible conductive material, rigid conductive material, metallic conductive material, metal compound material, metal alloy material, organic conductive material, inorganic conductive material, and composite conductive material, and one of the combinations thereof.

As illustrated above, the active switching element 13 is made from a wafer and not directly formed on some portion of the display medium module 15. Therefore, the manufacturing of the active switching element 13 may not be restricted by the characteristics of the display medium module 15. In addition, when the active switching element 13 is manufactured on a wafer, since wafers may endure a higher processing temperature, and since wafer processing technique is more matured and advanced, the active switching element 13 manufactured on a wafer may have better characteristics (e.g. of a smaller size, with a higher yield rate or a faster mobility rate in a transistor).

Further, it has been noted above that the display panel (not shown in the drawings) includes a plurality of pixel unit structures 1A. In this type of configuration, the first substrate 157A of the display medium module 15 in these pixel unit structures 1A may be connected and integrated and so may the second substrate 157B. One of the first electrode 151 and the second electrode 153 may also be connected and integrated to serve as a common electrode.

The foregoing description illustrates the technical content of a pixel unit structure 1A according to the present preferred embodiment. The technical content of pixel unit structures 1A according to other preferred embodiments of the present invention is described below. The technical content of the pixel unit structure in each of these preferred embodiments may be cross-referenced, so identical description is omitted or simplified.

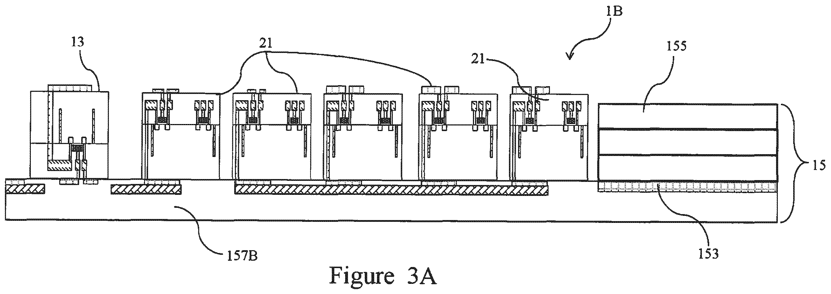

Please refer to Figure 3A, showing a cross-section view of a pixel unit structure 1B according to a second preferred embodiment of the present invention. The pixel unit structure 1B is similar to the pixel unit structure 1A, both including an active switching element 13 and a display medium module 15. The pixel unit structure 1B further comprises one or a plurality of functional elements 21 (a plurality of functional elements 21 are employed as an example in the present preferred embodiment).

The plurality of functional elements 21 are electronic elements each having (but not limited to) a specific function, for example: one of a touch sensing functional element, a displacement sensing functional element, a hygrothermal sensing functional element, an acoustic sensing functional element, an electromagnetic sensing functional element, an image capturing functional element, a memory functional element, a control functional element, a wireless communication functional element, a self-luminous functional element, a passive functional element (inductor, resistor, capacitor or a combination thereof) and a photovoltaic functional element.

The touch sensing functional element may include: one of a photo-sensing element, a piezoelectric sensing element, a capacitance sensing element, a resistance sensing element, an inductance sensing element, an electromagnetic sensing element, an electric charge sensing element, a voltage sensing element, a current sensing element and an acoustic sensing element.

The plurality of functional elements 21 may be disposed on the first substrate (not shown in the drawing) and/or the second substrate 157B of the display medium module 15, but not directly formed on some portion of the display medium module 15. That is, the functional elements 21 are manufactured before being assembled on the display medium module 15. Therefore, the functional elements 21 can also be manufactured independently without the restriction from the characteristics of the display medium module 15. The functional elements 21 may be electrically connected to the active switching element 13, control signal line 17, or data signal line 19 (or the pixel unit structure 1B may include other signal lines or electrodes for electrically connecting to the functional elements 21) for achieving the controlling functions of the functional elements 21, being controlled by the functional elements 21, transmitting signals to the functional elements 21, or receiving signals from the functional elements 21, and so on.

With the functional elements 21, the pixel unit structure 1B may provide other functions besides image display (display, touch, sensing, photography, data transmission, power generation, and so on). For example, an image capturing functional element may enable the pixel unit structure 1B to capture part of an image; a memory functional element may record the state of the pixel medium 155 or the data of the functional element 21 itself; a control functional element may control the active switching element 13; a wireless communication functional element may wirelessly transmit and receive data from the control module of a display device (which will be further described in the preferred embodiments below); a photovoltaic functional element may convert ambient light illumination into electrical power, and so on.

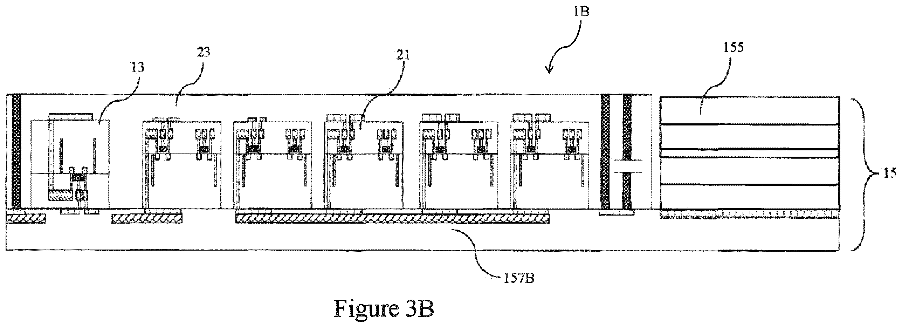

Please refer to Figure 3B, showing another cross-section view of a pixel unit structure 1B according to a second preferred embodiment of the present invention. The pixel unit structure 1B may optionally further include a package carrier 23, therein may be packaged an active switching element 13 and/or functional elements 21 before the package carrier 23 is assembled to the display medium module 15. That is, after the active switching element 13 or functional elements 21 are manufactured on a wafer, they may be first packaged in a package carrier 23 before being assembled to the display medium module 15. The active switching element 13 and functional elements 21 may be manufactured on a same wafer (or on different wafers) and then packaged together in the package carrier 23. The package carrier 23 may protect the active switching element 13 and functional elements 21 and may facilitate the process of assembling them to the display medium module 15.

The manufacture material of the package carrier 23 may include (but not limited to): semiconductor material, conductive material, insulating material, organic material, inorganic material, metallic material, metallic alloy material, ceramic material, compound material, transparent material, opaque material, flexible material, rigid material, non-metallic material, and one of the combinations thereof. The package carrier 23 may also include a substrate, a conductive line, a conductive connecting pad, a conductive connecting pole, a conductive connecting bump, a conductive connecting joint, an insulating medium layer, an insulating medium, an adhesive medium, a connecting wire, or a combination thereof, and so on.

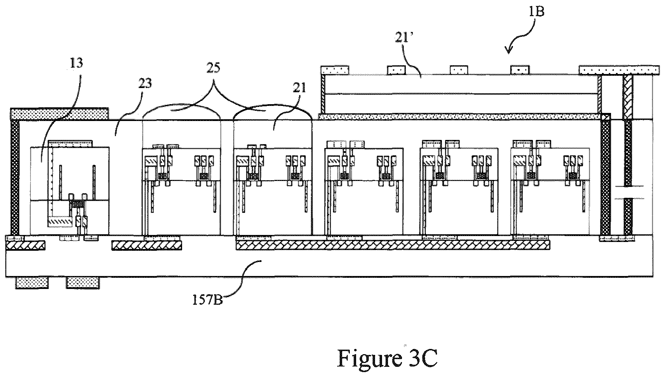

Please refer to Figure 3C, showing another cross-section view of a pixel unit structure 1B according to a second preferred embodiment of the present invention. After the active switching element 13 and the functional elements 21 are packaged in the package carrier 23, other functional elements 21' may also be disposed on the package carrier 23 (e.g. photovoltaic functional element, which may convert ambient light illumination into electric power to be provided to the package carrier 23. The pixel unit structure 1B may include one or a plurality of optical elements 25, which are disposed or formed on the package carrier 23 and positioned in correspondence to functional elements 21 related to optics (e.g. image capturing functional element) . The optical elements 25 may include at least one of a convex lens, a concave lens and an optical prism for changing the direction of ambient light illumination to be received by the functional elements 21.

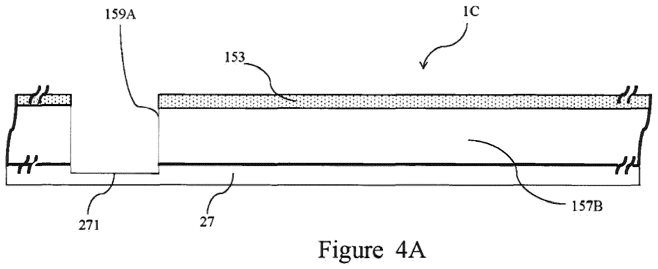

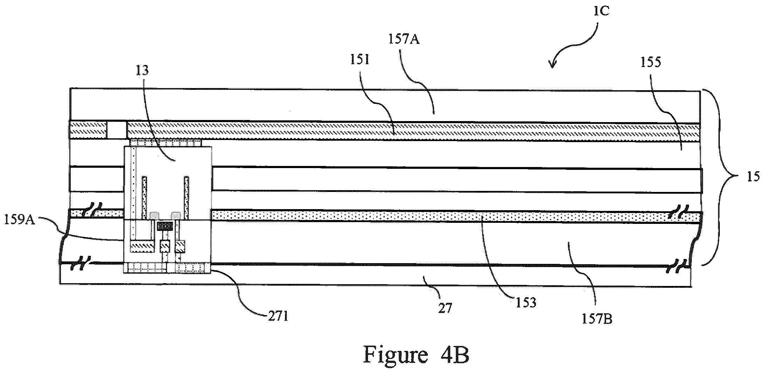

Please refer to Figures 4A and 4B, showing cross-section views of a pixel unit structure 1C according to a third preferred embodiment of the present invention. The pixel unit structure 1C is similar to the pixel unit structure 1A, both including an active switching element 13 and a display medium module 15. The pixel unit structure 1C further comprises a carrier board 27.

Specifically, the carrier board 27 may allow the display medium module 15 to be disposed thereon, and the active switching element 13 may be disposed on the carrier board 27. The carrier board 27 may also include a wire, an electrode and other elements for the display medium module 15 and the active switching element 13 to be electrically connected to each other. The control signal line 17 and the data signal line 19 may also be formed on the carrier board 27 and connected to the active switching element 13.

Further, the carrier board 27 may include a concave groove 271 (or through hole), wherein may the active switching element 13 be disposed. The first substrate 157A and/or the second substrate 157B of the display medium module 15 may also include a through hole 159A, and the active switching element 13 may be disposed in the concave groove 271 through the through hole 159A. The carrier board 27 may also include a sidewall insulating layer, an electric conductive pole, an electric conductive pad, an insulating medium or a combination thereof, which are disposed in the concave groove 271 for electrically connecting the active switching element 13 to other elements or isolating the active switching element 13 from other elements.

The disposition of the carrier board 27 facilitates the electrical connection arrangement among the elements of the pixel unit structure 1C, especially when the pixel unit structure 1C comprises a plurality of functional elements (not shown in the drawings).

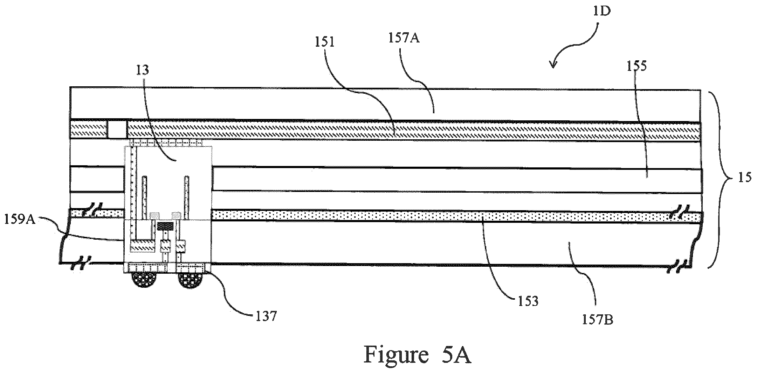

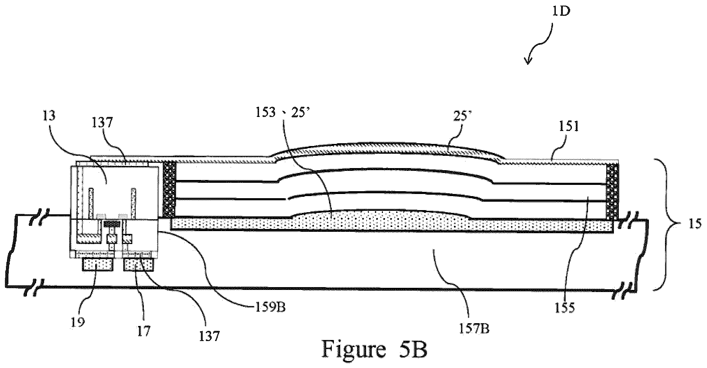

Please refer to Figures 5A and 5B, showing cross-section views of a pixel unit structure 1D according to a fourth preferred embodiment of the present invention. The pixel unit structure 1D is similar to the pixel unit structure 1A, except that the first substrate 157A and/or the second substrate 157B of the pixel unit structure 1D comprises a through hole 159A and/or a concave groove 159B.

As Figure 5A shows, when the active switching element 13 is disposed in the through hole 159A, its electrode 137 may be exposed on the first substrate 157A and/or the second substrate 157B. Then on the electrode 137 may be disposed solder, solder wire, solder bump and so on for electrically connecting the electrode 137 to other elements. As Figure 5B shows, when the active switching element 13 is disposed in the concave groove 159B, the active switching element 13 only partially protrudes from the first substrate 157A and/or the second substrate 157B, and the active switching element 13 may be electrically connected to the control signal line 17 and the data signal line 19 in the concave groove 159B.

The pixel unit structure 1D may also include an optical element 25', which may be formed in the display medium module 15, e.g. formed on the first electrode 151 or the second electrode 153 (or the optical element 25' is directly formed from the first electrode 151 or the second electrode 153), and which may be optically coupled with the display medium 155. As such, the optical element 25' may guide ambient light illumination into the display medium module 15, and then the display medium 155 may modulate the amount or characteristics of the ambient light illumination leaving the display medium module 15. When there is sufficient ambient light illumination, the pixel unit structure 1D may directly use the ambient light illumination to achieve the function of image pixel display or light modulation. The optical element 25' may include at least one of a convex lens, a concave lens and an optical prism.

Described below are a manufacturing method of a pixel unit structure not forming part, however, of the present invention and its application as a display device.

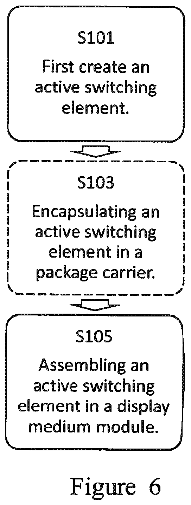

Please refer to Figure 6, showing a flow diagram of a manufacturing method of a pixel unit structure according to a fifth preferred embodiment of the present invention. The manufacturing method may produce one or a plurality of identical or similar pixel unit structures 1A to 1D of the foregoing preferred embodiments. Therefore, the technical content of the manufacturing method and the technical content of the pixel unit structures 1A to 1D may be cross-referenced.

As Step S101 shows, firstly manufacture an active switching element; that is, in contrast with a display medium module of a pixel unit structure, the active switching element is independently manufactured, rather than being directly manufactured on the display medium module. The functional elements are also manufactured in advance and may be manufactured on a same wafer as (or on different wafers from) the active switching element. The functional elements and the active switching element may be on the same chip or die (or different chips or dice).

Next, as Step S105 shows, assemble the pre-manufactured active switching element to the display medium module. At this moment, the display medium module may still be in the process of being manufactured; for example, only after the active switching element is disposed on the second substrate of the display medium module are the display medium and the first substrate sequentially disposed on the second substrate. In addition, in Step S105, functional elements may also be simultaneously assembled to the display medium module.

Further, before performing Step S105, the pre-manufactured active switching element may be optionally packaged in a package carrier (e.g. in Step S103); the functional elements may also be simultaneously packaged in the package carrier. Therefore, if there is no need of a package carrier, S103 may be omitted.

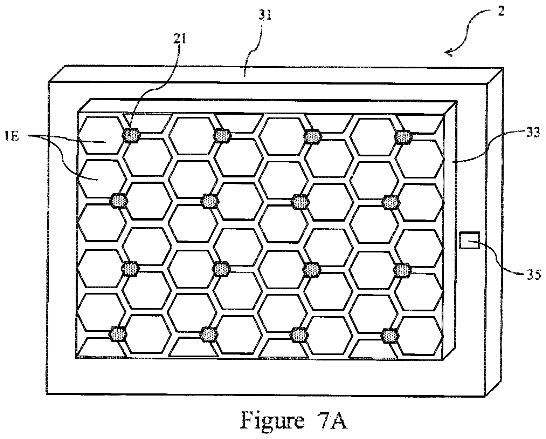

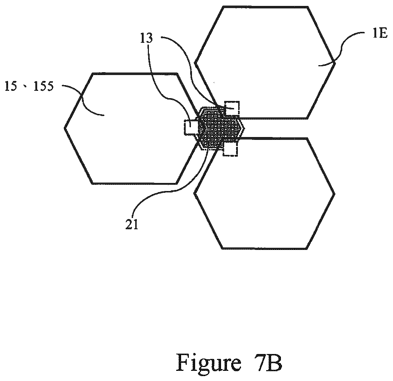

Please refer to Figures 7A and 7B, showing a three-dimensional view and a partial enlargement view of a display device according to a sixth preferred embodiment of the present invention. The display device 2 includes a plurality of pixel unit structures 1E and a housing structure 31. The plurality of pixel unit structures 1E may be one of the foregoing pixel unit structures 1A to 1D or a technical combination thereof, and the plurality of pixel unit structures 1E are disposed in the housing structure 31. The housing structure 31 may include a transparent substrate (e.g. a glass or plastic substrate) for allowing the plurality of pixel unit structures 1E to be observed through the transparent substrate.

Further, if the display media 155 of the pixel unit structures 1E are made of non-self-luminous medium material, the display device 2 may further include a light source module 33, positioned on any side of the display medium module 15 of the plurality of pixel unit structures 1E (e.g. rear side, upper side, underside, front side, left side, right side) for providing light to the display medium module 15. If the display media 155 of the pixel unit structures 1E are made of self-luminous medium material or use ambient light illumination for its light source, the light source module 33 may be optionally omitted or turned off (i.e. the light source module 33 does not provide light); or, when the display media 155 made of self-luminous medium material do not provide sufficient light or when there is insufficient ambient light illumination, the light source module 33 may provide additional light.

Further, the pixel unit structure 1E may include a functional element 21 having the function of wireless communication. The functional element 21 may wirelessly receive the control signals and data signals from the control module 35 of the display device 2 and further transmit these signals to the active switching element 13. That is, the control module 35 may be electrically connected to the active switching element 13 without passing through a substantial wire (e.g. the control signal line 17 and the data signal line 19 as shown in Figure 1). The control module 35 may wirelessly control the active switching element 13 to further control the state of the display medium 155. In addition, a functional element 21 with the function of wireless communication may simultaneously be electrically connected to the active switching elements 13 of a plurality of pixel unit structures 1E. Therefore, the total number of functional elements 21 may be fewer than the total number of active switching elements 13.

The foregoing functional element 21 with the function of wireless communication may be of (but not limited to) the following types: radio frequency (RF) wireless transmission, Zigbee wireless transmission, blue-tooth communication, infrared ray, wireless fidelity (Wi-Fi) wireless transmission, personal area networks (PAN), local area networks (LAN), near field communication (NFC), radio frequency identification (RFID), global system for mobile communication (GSM) and worldwide interoperability for microwave access (WiMAX), long-term evolution (LTE), 5th generation wireless communication and one of the combinations thereof.

Further, the shape combination of the display medium module 15 in a pixel unit structure 1E may be from (but not limited to) the following: square, rectangular, fan-shaped, triangular, trapezoid, round, polygonal, irregular, or one of the combinations thereof. In the present embodiment, the display medium module 15 is arranged as a hexagon for an example.

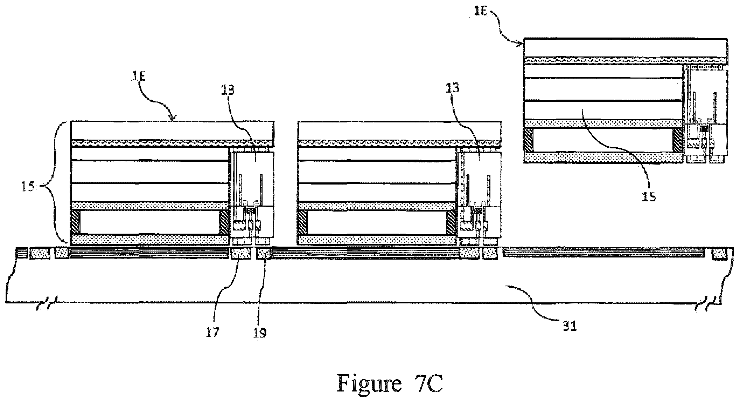

Further, as Figure 7C shows, the pixel unit structures 1E are arranged as independently assembled and disassembled, i.e. none of the elements of any pixel unit structure 1E is connected and integrated to any of the elements of another pixel unit structure 1E. Thus, each of the pixel unit structures 1E may be independently disassembled from the housing structure 31. Therefore, when one of the pixel unit structures 1E is damaged, it may be disassembled and replaced with a good pixel unit structure 1E.

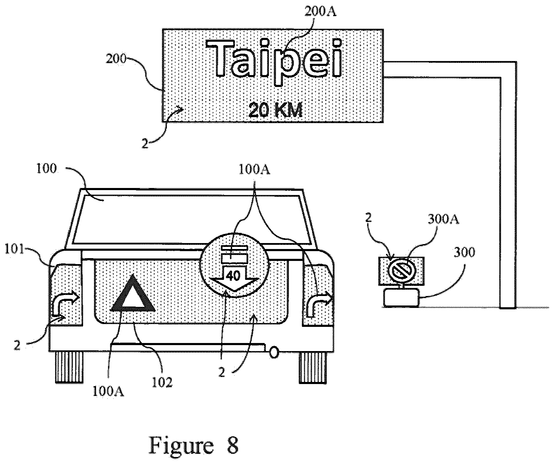

Please refer to Figure 8, showing an application schematic view of the display device 2 of Figure 7A. The display device 2 may not only be applied to electronic products such as computer and mobile phone but also to any product that may be equipped with a display function such as a transportation vehicle, wear products, building and billboard. Take a car 100 for an example, the display device 2 may serve as a rear car light 101 of the car 100 for showing images 100A of various kinds of driving information (e.g. turning, changing lanes, slowing down, speeding up, speed per hour, warning and the like) to other vehicles or pedestrians. In addition, with the functional element 21 of the pixel unit structure 1E, the display device 2 may be equipped with the functions of displacement sensing, hygrothermal sensing, acoustic sensing, electromagnetic sensing, image capturing and the like for sensing various environmental information outside the car.

Besides serving as a rear car light 101 of the car 100, the display device 2 may also serve as a front car light (not shown in the drawing), a dashboard (not shown in the drawing) and the like of the car 100 or may be disposed on the glass of the car 100. In addition, because the display medium module 15 of the plurality of pixel unit structures 1E of the display device 2 may be made of flexible material, or the plurality of pixel unit structures 1E may be independently assembled and disassembled, the display device 2 may be disposed along a curved shell 102 of the car 100 to serve as a lacquer or color painting design on the curved shell 102. This way, a user may easily change the lacquer or color painting design on the curved shell 102 and the curved shell 102 may also display images 100A of driving information.

The display device 2 may also be applied to a traffic notice board 200 for showing images 200A of destination, route and other information; the display device 2 may also be applied to a road warning device 300 for showing an image 300A to inform drivers of the road conditions ahead. The display device 2 may also serve as a road marker or road sign and the like.

The foregoing description illustrates the technical content of the pixel unit structure, a manufacturing method thereof, and a display device according to various preferred embodiments of the present invention. The foregoing description is illustrated of the present invention rather than limiting of the present invention. Any change easily made by those ordinarily skilled in the art of the present invention or any equivalent arrangement that falls within the scope of the present invention, is defined in the appended claims.

Those skilled in the art will readily observe that numerous modifications and alterations of the device and method may be made while retaining the teachings of the invention. Accordingly, the above disclosure should be construed as limited only by the appended claims.

## Claims

1. A display device (2) comprising:
a housing structure (31); and
a plurality of pixel unit structures (1E), independently assembled with the housing structure (31), each of the pixel unit structures (1E) comprising:
a display medium module (15) comprising a first electrode (151) disposed on a first substrate (157A), a second electrode (153) and a display medium (155), wherein the first electrode (151) and the second electrode (153) are separated from each other, and the display medium (155) is disposed between the first electrode (151) and the second electrode (153); and
an active switching element (13) electrically connected to the first electrode (151) for allowing the first electrode (151) and the second electrode (153) to change the state of the display medium (155), and wherein the active switching element (13) includes a chip part (133) and a transistor portion (135) with the transistor portion (135) formed on the chip part (133);
wherein each of the pixel unit structures (1E) is configured to be independently disassembled from the housing structure (31) and replaced with another pixel unit structure (1E).

2. The display device (2) of claim 1, **characterized in that** the display medium module (15) further comprises the first substrate (157A) and a second substrate (157B), which are disposed facing each other and separated from each other; wherein the second electrode (153) is disposed on the first substrate (157A) or the second substrate (157B); wherein the active switching element (13) is disposed on the first substrate (157A) or the second substrate (157B).

3. The display device (2) of claim 2, **characterized in that** the first substrate (157A) or the second substrate (157B) is made of at least one of transparent material, opaque material, flexible material, rigid material, metallic material, ceramic material, insulating material, metal compound material, metal alloy material, organic material, inorganic material, composite material and semiconductor material.

4. The display device (2) of claim 1, **characterized in that** each of the pixel unit structures (1E) further comprises a package carrier (23), therein is packaged the active switching element (13).

5. The display device (2) of claim 4, **characterized in that** each of the pixel unit structures (1E) further comprises a functional element (21) packaged in the package carrier (23), the functional element (21) comprising at least one of a displacement sensing functional element, a hygrothermal sensing functional element, an acoustic sensing functional element, an electromagnetic sensing functional element, a touch sensing functional element, an image capturing functional element, a memory functional element, a control functional element, a wireless communication functional element, a passive functional element, a self-luminous functional element and a photovoltaic functional element.

6. The display device (2) of claim 3, **characterized in that** each of the pixel unit structures (1E) further comprises a functional element (21) disposed on the first substrate (157A) and/or the second substrate (157B), the functional element (21) comprising at least one of a displacement sensing functional element, a hygrothermal sensing functional element, an acoustic sensing functional element, an electromagnetic sensing functional element, a touch sensing functional element, an image capturing functional element, a memory functional element, a control functional element, a wireless communication functional element, a passive functional element, a self-luminous functional element and a photovoltaic functional element.

7. The display device (2) of claim 2,
**characterized in that** the first substrate (157A) or the second substrate (157B) comprise a concave groove (159B) or a through hole (159A), and the active switching element (13) is disposed in the concave groove (159B) or the through hole (159A); or
each of the pixel unit structures (1E) further comprises a control signal line (17) and a data signal line (19), wherein the control signal line (17) and the data signal line (19) are formed on the first substrate (157A) or the second substrate (157B) of the display medium module (15) and electrically connected to the active switching element (13).

8. The display device (2) of claim 1, **characterized in that** the display medium module (15) further comprises an optical element (25) optically coupled with the display medium (155) and the optical element (25) comprises at least one of a convex lens, a concave lens and an optical prism.

9. The display device (2) of claim 1, **characterized in that** the display medium (155) comprises at least one of self-luminous medium material, non-self-luminous medium material, light-filtering material, electric conductive material, insulating material, light absorbing material, light reflecting material, photorefractive material, light deflecting material and light diffusing material;
wherein the non-self-luminous medium material comprises at least one of electrophoretic material, electric fluid material, liquid crystal material, micro electromechanical reflective material, electrowetting material, electric ink material, magnetic fluid material, electrochromic material, electromorphous material and thermochromic material; the self-luminous medium material include at least one of electroluminescent material, photoluminescent material, cathodoluminescent material, field emissive luminescent material, vacuum fluorescent material and light-emitting diode material.

10. The display device (2) of claim 1 further comprising a light source module (33), which is disposed in the housing structure (31) and positioned on any side of the display medium module (15).

11. The display device (2) of claim 1, **characterized in that** the active switching element (13) further comprises a functional element (21) formed on the chip part (133), and the functional element (21) comprises at least one of a displacement sensing functional element, a hygrothermal sensing functional element, an acoustic sensing functional element, an electromagnetic sensing functional element, a touch sensing functional element, an image capturing functional element, a memory functional element, a control functional element, a wireless communication functional element, a passive functional element, a self-luminous functional element and a photovoltaic functional element.

12. The display device (2) of claim 1 further comprising a control module (35), which is configured to wirelessly control the active switching element (13) to further control the state of the display medium (155).

13. The display device (2) of claim 1 **characterized in that** the shape of the display medium module (15) is square, rectangular, fan-shaped, triangular, trapezoid, round, polygonal, irregular, or one of the combinations thereof.

## Patentansprüche

1. Anzeigevorrichtung (2) umfassend:
ein Gehäuse (31); und
eine Vielzahl von Pixeleinheitenstrukturen (1E), die unabhängig mit dem Gehäuse (31) zusammengesetzt sind, wobei jede der Pixeleinheitenstrukturen (1E) umfasst:
eine Anzeigemedienmodul (15) umfassend eine erste Elektrode (151), die auf einem ersten Substrat (157A) angeordnet ist, eine zweite Elektrode (153) und ein Anzeigemedium (155), wobei die erste Elektrode (151) und die zweite Elektrode (153) voneinander getrennt sind, und der Anzeigemedium (155) zwischen der ersten Elektrode (151) und die zweite Elektrode (153) angeordnet ist; und
ein aktives Schaltelement (13), das elektrisch mit der ersten Elektrode (151) verbunden ist für Erlauben die erste Elektrode (151) und die zweite Elektrode (153) den Zustand des Anzeigemediums (155) zum ändern, und wobei das aktive Schaltelement (13) ein Chipteil (133) und einen Transistorabschnitt (135) umfasst, wobei der Transistorabschnitt (135) an dem Chipteil (133) ausgebildet ist;
wobei jede der Pixeleinheitsstrukturen (1E) konfiguriert ist, dass unabhängig aus dem Gehäuse (31) zerlegt und durch eine andere Pixeleinheitenstruktur (1E) ersetzt wird.

2. Anzeigevorrichtung (2) nach Anspruchs 1, **dadurch gekennzeichnet, dass** das Anzeigemedienmodul (15) ferner das erste Substrat (157A) und ein zweites Substrat (157B) umfasst, die einander zugewandt und voneinander getrennt angeordnet sind; wobei die zweite Elektrode (153) auf dem ersten Substrat (157A) oder dem zweiten Substrat (157B) angeordnet ist; wobei das aktive Schaltelement (13) auf dem ersten Substrat (157A) oder dem zweiten Substrat (157B) angeordnet ist.

3. Anzeigevorrichtung (2) nach Anspruchs 2, **dadurch gekennzeichnet, dass** das erste Substrat (157A) oder das zweite Substrat (157B) aus mindestens einem transparenten Material, undurchsichtigem Material, flexiblem Material, starrem Material, metallischem Material, keramischem Material, Isoliermaterial, Metallverbindungsmaterial, Metalllegierungsmaterial, organischem Material, anorganischem Material, Verbundmaterial und Halbleitermaterial hergestellt ist.

4. Anzeigevorrichtung (2) nach Anspruchs 1, **dadurch gekennzeichnet, dass** jede der Pixeleinheitsstrukturen (1E) ferner einen Paketträger (23) umfasst, darin das aktive Schaltelement (13) verpackt ist.

5. Anzeigevorrichtung (2) nach Anspruchs 4, **dadurch gekennzeichnet, dass** jede der Pixeleinheitenstrukturen (1E) ferner ein funktionales Element (21) verpackt im Paketträger (23) umfasst, das Funktionselement (21) mit mindestens einem Wegsensor-Funktionselement, einem hygrothermischen Sensor-Funktionselement, einem akustischen Sensor-Funktionselement, einem elektromagnetischen Sensor-Funktionselement, einem Berührungssensor-Funktionselement, einem BilderfassungsFunktionselement, einem Speicher-Funktionselement, einem SteuerungsFunktionselement, einem drahtlosen Kommunikations-Funktionselement, einem passiven Funktionselement, einem selbstleuchtenden Funktionselement und einem photovoltaischen Funktionselement umfassend.

6. Anzeigevorrichtung (2) nach Anspruchs 3, **dadurch gekennzeichnet, dass** jede der Pixeleinheitsstrukturen (1E) ferner ein Funktionselement (21) aufweist, das auf dem ersten Substrat (157A) und/oder dem zweiten Substrat (157B) angeordnet ist, wobei das Funktionselement (21) mindestens eines aus einem Wegerfassungsfunktionselement, einem hygrothermischen Sensorfunktionselement, einem akustischen Sensorfunktionselement, einem akustischen Sensorfunktionselement, ein elektromagnetisches Sensorfunktionselement, ein Berührungssensor-Funktionselement, ein Bilderfassungsfunktionselement, ein Speicherfunktionselement, ein Steuerungsfunktionselement, ein drahtloses Kommunikationsfunktionselement, ein passives Funktionselement, ein selbstleuchtendes Funktionselement und ein photovoltaisches Funktionselement umfassend.

7. Anzeigevorrichtung (2) nach Anspruch 2, **dadurch gekennzeichnet, dass** das erste Substrat (157A) oder das zweite Substrat (157B) eine konkave Nut (159B) oder eine Durchgangsbohrung (159A) umfasst, und das aktive Schaltelement (13) in der konkaven Nut (159B) oder der Durchgangsbohrung (159A) angeordnet ist; oder
jede der Pixeleinheitsstrukturen (1E) ferner eine Steuersignalleitung (17) und eine Datensignalleitung (19) umfasst, wobei die Steuersignalleitung (17) und die Datensignalleitung (19) auf dem ersten Substrat (157A) oder dem zweiten Substrat (157B) des Anzeigemedienmoduls (15) ausgebildet und elektrisch mit dem aktiven Schaltelement (13) verbunden sind.

8. Anzeigevorrichtung (2) nach Anspruch 1, **dadurch gekennzeichnet, dass** das Anzeigemedienmodul (15) ferner ein optisch mit dem Anzeigemedium (155) gekoppeltes optisches Element (25) umfasst und das optische Element (25) mindestens eine aus eine Konvexen Linse, eine Konkaven Linse und eine Optischen Prisma umfasst.

9. Anzeigevorrichtung (2) nach Anspruchs 1, **dadurch gekennzeichnet, dass** das Anzeigemedium (155) mindestens eines aus selbstleuchtende Medienmaterial, nicht-selbstleuchtende Medienmaterial, lichtfilterndem Material, elektrisch leitfähigem Material, isolierendem Material, lichtabsorbierendem Material, lichtreflektierendem Material, photorechendem Material, lichtlenkendem Material und lichtstreuendem Material umfasst;
wobei das nicht-selbstleuchtende Medienmaterial, mindestens eines aus elektrophoretischem Material, elektrischem Fluidmaterial, Flüssigkristallmaterial, mikroelektromechanischem reflektierendem Material, elektrobenetzendem Material, elektrischem Tintenmaterial, magnetischem Fluidmaterial, elektrochromem Material, elektromorphem Material und thermochromem Material umfasst; Das selbstleuchtende Mediummaterial mindestens eines aus elektrolumineszierendem Material, photolumineszierendem Material, kathodolumineszierendem Material, feldemittierendem lumineszierendem Material, vakuumfluoreszierendem Material und lichtemittierendem Diodenmaterial umfasst.

10. Anzeigevorrichtung (2) nach Anspruch 1, ferner ein Lichtquellenmodul (33) umfassend, die in dem Gehäuse (31) angeordnet ist und auf beliebigen Seite des Anzeigemediummoduls (15) positioniert.

11. Anzeigevorrichtung (2) nach Anspruch 1, **dadurch gekennzeichnet, dass** das aktive Schaltelement (13) ferner ein an dem Chipteil (133) ausgebildetes Funktionselement (21) umfasst, und das Funktionselement (21) mindestens eines aus einem Wegerfassungsfunktionselement, einem hygrothermischen Sensorfunktionselement, einem akustischen Sensorfunktionselement, einem akustischen Sensorfunktionselement, ein elektromagnetisches Sensorfunktionselement, ein Berührungssensor-Funktionselement, ein Bilderfassungsfunktionselement, ein Speicherfunktionselement, ein Steuerungsfunktionselement, ein drahtloses Kommunikationsfunktionselement, ein passives Funktionselement, ein selbstleuchtendes Funktionselement und ein photovoltaisches Funktionselement umfasst.

12. Anzeigevorrichtung (2) nach Anspruch 1, ferner ein Steuermodul (35) umfassend, das zur drahtlos des aktiven Schaltelements (13) zu steuern dazu konfiguriert ist, um den Zustand des Anzeigemediums (155) weiter zu steuern.

13. Anzeigevorrichtung (2) nach Anspruch 1, **dadurch gekennzeichnet, dass** die Form des Anzeigemedienmodul (15) quadratisch, rechteckig, fächerförmig, dreieckig, trapezförmig, rund, polygonal, unregelmäßig oder eine der Kombinationen davon ist.

## Revendications

1. Dispositif d'affichage (2) comprenant:
une structure de logement (31); et
une pluralité des structures d'unités de pixels (1E), assemblées indépendamment avec la structure du logement (31), chacune des structures unitaires de pixels (1E) comprenant:
un module de multimédia d'affichage (15) comprenant une première électrode (151) disposée sur un premier support (157A), une deuxième électrode (153) et un multimédia d'affichage (155), dans lequel la première électrode (151) et la seconde électrode (153) sont séparées l'une de l'autre, et le multimédia d'affichage (155) est disposé entre la première électrode (151) et la deuxième électrode (153) ; et
un élément de commutation actif (13) connecté électriquement à la première électrode (151) pour permettre à la première électrode (151) et à la deuxième électrode (153) de changer l'état du multiméldia d'affichage (155), et dans lequel l'élément de commutation actif (13) comprend une partie puce (133) et une partie transistor (135) avec la partie transistor (135) formée sur la partie puce (133);
dans laquelle chacune des structures d'unités de pixels (1E) est configurée pour être séparée indépendamment de la structure du logement (31) et remplacée avec une autre structure d'unité de pixels (1E).

2. Dispositif d'affichage (2) de la revendication 1, **caractérisé en ce que** le module multimédia d'affichage (15) comprend en outre le premier substrat (157A) et un deuxième substrat (157B), qui sont disposés l'un en face de l'autre et séparés l'un de l'autre; dans laquelle la deuxième électrode (153) est disposé sur le premier substrat (157A) ou le deuxième substrat (157B); dans laquelle l'élément de commutation actif (13) est disposé sur le premier substrat (157A) ou le second substrat (157B).

3. Dispositif d'affichage (2) de la revendication 2, **caractérisé en ce que** le premier substrat (157A) ou le second substrat (157B) est constitué d'au moins un matériau transparent, matériau opaque, matériau flexible, matériau rigide, matériau métallique, matériau céramique, matériau isolant, matériau composé métallique, matériau alliage métallique, matériau organique, matériau inorganique, matériau composite et matériau semi-conducteur.

4. Dispositif d'affichage (2) de la revendication 1, **caractérisé en ce que** chacune des structures d'unités de pixels (1E) comprend en outre un porteur le encapsule (23), dans lequel est encapsulé l'élément de commutation actif (13).

5. Dispositif d'affichage (2) de la revendication 4, **caractérisé en ce que** chacun des structures unitaires de pixels (1E) comprend en outre un élément fonctionnel (21) encapsulé dans le porteur encapsule (23), l'élément fonctionnel (21) comprenant au moins un élément fonctionnel de détection de déplacement, un élément fonctionnel de détection hygrothermique, un élément fonctionnel de détection acoustique, un élément fonctionnel de détection électromagnétique, un élément fonctionnel de détection tactile, un élément fonctionnel de capture d'image, un élément fonctionnel de mémoire, un élément fonctionnel de commande, un élément fonctionnel de communication sans fil, un élément fonctionnel passif, un élément fonctionnel autolumineux et un élément fonctionnel photovoltaïque.

6. Dispositif d'affichage (2) de la revendication 3, **caractérisé en ce que** chacun des structures unitaires de pixels (1E) comprend en outre un élément fonctionnel (21) disposé sur le premier substrat (157A) et/ou le deuxième substrat (157B), l'élément fonctionnel (21) comprenant au moins un élément fonctionnel de détection de déplacement, un élément fonctionnel de détection hygrothermique, un élément fonctionnel de détection acoustique, un élément fonctionnel de détection électromagnétique, un élément fonctionnel de détection tactile, un élément fonctionnel de capture d'image, un élément fonctionnel de mémoire, un élément fonctionnel de commande, un élément fonctionnel de communication sans fil, un élément fonctionnel passif, un élément fonctionnel autolumineux et un élément fonctionnel photovoltaïque.

7. Dispositif d'affichage (2) de la revendication 2,
**caractérisé en ce que** le premier substrat (157A) ou le second substrat (157B) comprend une rainure concave (159B) ou un trou traversant (159A), et l'élément de commutation actif (13) est disposé dans la rainure concave (159B) ou le trou traversant (159A) ; ou
chacune des structures de l'unité de pixels (1E) comprend en outre une ligne de signal de commande (17) et une ligne de signal de données (19), dans lesquelles la ligne de signal de commande (17) et la ligne de signal de données (19) sont formées sur le premier substrat (157A) ou le deuxième substrat (157B) du module de multimédia d'affichage (15) et connectées électriquement à l'élément de commutation actif (13).

8. Dispositif d'affichage (2) de la revendication 1, **caractérisé en ce que** le module de multimédia d'affichage (15) comprend en outre un élément optique (25) couplé optiquement avec le multimédia d'affichage (155) et l'élément optique (25) comprend au moins une lentille convexe, une lentille concave et un prisme optique.

9. Le dispositif d'affichage (2) de la revendication 1, **caractérisé en ce que** le multimédia d'affichage (155) comprend au moins un matériau de multimédia autolumineux, un matériau de multimédia non autolumineux, un matériau filtrant la lumière, un matériau conducteur d'électricité, un matériau isolant, un matériau absorbant la lumière, un matériau réfléchissant la lumière, un matériau photoréfractif, un matériau déviant la lumière et un matériau diffusant la lumière;
dans laquelle le matériau de multimédia non autolumineux comprend au moins un matériau électrophorétique, un matériau fluide électrique, un matériau cristallin liquide, un matériau réfléchissant microélectromécanique, un matériau électromouillant, un matériau d'encre électrique, un matériau fluide magnétique, un matériau électrochrome, un matériau électromorphe et un matériau thermochromique ; le matériau de multimédia autolumineux comprend au moins un matériau électroluminescent, un matériau photoluminescent, un matériau cathodoluminescent, un matériau luminescent émissif sur le terrain, un matériau fluorescent sous vide et un matériau à diodes électroluminescentes.

10. Dispositif d'affichage (2) de la revendication 1 comprenant en outre un module d'éclairage (33), qui est disposé dans la structure du logement (31) et positionné de n'importe quel côté du module de multimédia d'affichage (15).

11. Dispositif d'affichage (2) de la revendication 1, **caractérisé en ce que** l'élément de commutation actif (13) comprend en outre un élément fonctionnel (21) formée sur la partie puce (133), et l'élément fonctionnel (21) comprend au moins un élément fonctionnel de détection de déplacement, un élément fonctionnel de détection hygrothermique, un élément fonctionnel de détection acoustique, un élément fonctionnel de détection électromagnétique, un élément fonctionnel de détection tactile, un élément fonctionnel de capture d'image, un élément fonctionnel de mémoire, un élément fonctionnel de commande, un élément fonctionnel de communication sans fil, un élément fonctionnel passif, un élément fonctionnel autolumineux et un élément fonctionnel photovoltaïque.

12. Dispositif d'affichage (2) de la revendication 1 comprenant en outre un module de commande (35), qui est configuré pour commander sans fil l'élément de commutation actif (13) afin de contrôler davantage l'état du multimédia d'affichage (155).

13. Dispositif d'affichage (2) de la revendication 1 **caractérisé en ce que** la forme du module de support d'affichage (15) est carrée, rectangulaire, en forme d'éventail, triangulaire, trapézoïdale, ronde, polygonale, irrégulière, ou l'une des combinaisons de ceux-ci.
